# EUROPEAN PATENT APPLICATION

(11) **EP 4 711 192 A1**
(43) Date of publication of application: **18.03.2026**
(21) Application number: 25201056.6
(22) Date of filing: 09.09.2025
(51) Int. Cl.: B60L 53/16, B60L 53/35, B60L 53/37

(54) **END EFFECTOR FOR AUTONOMOUS ELECTRIC VEHICLE CHARGING**

(30) Priority: 11.09.2024 AU 2024902888
(71) Applicant: WAE Technologies Australia Pty Ltd, 6000 Perth WA (AU)
(72) Inventor: HA, Chon, Perth (AU); PAGET, Caleb, Perth (AU)
(74) Representative: Piotrowicz, Pawel Jan Andrzej

(57) **Abstract**

A robotic arm is configured to move an end effector to facilitate simultaneous engagement of two or more charging plugs with two or more charging sockets of an electric vehicle. The end effector includes a mounting bracket for coupling the end effector to the robotic arm, a housing associated with the mounting bracket, and an imaging device mounted on the mounting bracket. The housing is configured to maintain the two or more charging plugs in a rigid array for mating with a complementary array of two or more charging sockets of the electric vehicle. The imaging device is configured to generate a pose signal indicative of a pose of the complementary array of said charging sockets of the electric vehicle, whereby a controller associated with the robotic arm is arranged to receive the pose signal and determine a spatial relationship between said array of charging plugs and the complementary array of charging sockets and to control the robotic arm using the determined spatial relationship to align the housing of the end effector to facilitate engagement of said array of charging plugs with the complementary array of said charging sockets.

## Description

### Technical Field

The disclosure relates to an end effector to facilitate simultaneous engagement of two or more charging plugs with two of more charging sockets of an electric vehicle, an electric vehicle charging system and a method of charging an electric vehicle.

### Background

The discussion of the background to the disclosure is intended to facilitate an understanding of the disclosure. However, it should be appreciated that the discussion is not an acknowledgement or admission that any of the material referred to was published, known or part of the common general knowledge as at the priority date of the application.

In an effort to lower carbon dioxide emissions, it is desirable to use electrically-operated ('electric') heavy land vehicles such as buses, trucks and mining equipment, marine vessels and aviation, rather than those powered by diesel engines and internal combustion engines. The driving range of electric vehicles is limited by the weight, size and capacity of the onboard rechargeable batteries to store electrical power. Consequently, there is a need to recharge the batteries frequently but also rapidly to minimise downtime of the electric vehicles during charging.

Various autonomous charging systems for an electric vehicle are known. Generally such systems include a robot or other manipulating device for engaging a charging plug with a complementary charging socket on a vehicle. The robot may be equipped with a manipulator which engages the charging plug with the charging socket, an imaging device and a control unit. The robot uses the imaging device to identify the pose of the vehicle and the charging socket thereon and the control unit then directs the manipulator to mate the charging plug with the socket of the vehicle. As soon as the charging process is complete, the robot manipulator removes the charging plug from the socket.

Such autonomous charging systems are configured to engage a single charging plug with a single charging socket. All charging plugs have a physical limit to the amount of power they can supply. For example, a single charging plug may be limited to supplying 3MWh of power to the rechargeable battery. By using more than one charging plug, the charging rate may be appropriately increased.

Providing two or more robots with respective charging plugs would increase the space, cost and effort required to install them in a charging station for electric vehicles. Consequently, there is a need to provide a single robot with an end effector configured to engage two or more charging plugs simultaneously with two or more charging sockets on an electric vehicle.

The simultaneous engagement of two or more charging plugs with two or more charging sockets by a single robot manipulator requires precise positioning of said charging plugs as misalignment of only one of the charging plugs with its respective complementary socket (e.g. rotational misalignment or translational misalignment) will prevent simultaneous engagement of all the charging plugs.

Moreover, when the two or more charging plugs are engaged with the two or more charging sockets and charging is ongoing, the heavy land vehicles may be subject to dynamic forces and movement consequent to weather (e.g. wind loading) or other environmental conditions (e.g. load shifting, blasting events in mining environments). Such movement places strain on the charging plugs which are fixed in position by the robot manipulator.

The present disclosure seeks to overcome at least some of the disadvantages discussed above.

### Summary

The disclosure provides an end effector to facilitate simultaneous engagement of two or more charging plugs with two of more charging sockets of an electric vehicle, an electric vehicle charging system and a method of charging an electric vehicle.

In one aspect of the disclosure there is provided an end effector supported by a robotic arm, the robotic arm being configured to move the end effector to facilitate simultaneous engagement of two or more charging plugs with two or more charging sockets of an electric vehicle, said end effector comprising:
a mounting bracket for coupling the end effector to the robotic arm;
a housing associated with the mounting bracket, the housing configured to maintain two or more charging plugs in a rigid array for mating with a complementary array of two or more charging sockets of an electric vehicle; and,
an imaging device mounted on the mounting bracket, the imaging device configured to generate a pose signal indicative of a pose of the complementary array of said charging sockets of the electric vehicle, whereby a controller associated with the robotic arm is arranged to receive the pose signal and determine a spatial relationship between said array of charging plugs and the complementary array of charging sockets and to control the robotic arm using the determined spatial relationship to align the housing of the end effector to facilitate engagement of said array of charging plugs with the complementary array of said charging sockets.

In one embodiment, the end effector further comprises a load sensor associated with the mounting bracket, the load sensor configured to generate an engagement signal indicative of strain associated with engagement of said charging plugs with said charging sockets, whereby the controller associated with the robotic arm is arranged to control the robotic arm to re-orient the end effector in response to the engagement signal when the engagement signal is indicative of strain above a predetermined threshold.

In one embodiment, the load sensor may be configured to provide a signal confirming that the array of charging plugs is engaged with the complementary array of said charging sockets.

In one embodiment the load sensor comprises a strain gauge, a force/torque sensor.

In one embodiment the robotic arm is configured to move the end effector in six degrees of motion. In alternative embodiments the robotic arm may be configured to move the end effector in three degrees of motion or four degrees of motion.

In one embodiment, the two or more charging plugs are disposed in vertical alignment with one another. In another embodiment, the two or more charging plugs are disposed in horizontal alignment with one another. In another embodiment, four or more charging plugs are disposed in an array of x x y, where x ≥ 2 and *y* ≥ 2. In alternative embodiments, the two or more charging plugs are disposed in a circular array, a triangular array or a polygonal array (e.g. hexagonal array).

In one embodiment, the housing is laterally offset from a terminal end of the robotic arm so as not to obscure a view or line of sight of the imaging device.

In one embodiment, an upper edge and a lower edge of the housing are spaced equidistantly from the load sensor.

In one embodiment, the end effector further comprises a nozzle in fluid communication with a source of compressed air, wherein the controller associated with the robotic arm is arranged to actuate the nozzle to direct a stream of compressed air towards said charging sockets to remove particulates therefrom prior to engaging said array of charging plugs with the complementary array of said charging sockets.

The term 'particulates' as used herein refers to dust particles, sand, grit and so forth. Advantageously, water droplets and condensation may also be removed from the charging sockets by directing a stream of compressed air towards them.

In another aspect of the disclosure there is provided a method of simultaneously engaging two or more charging plugs with two or more charging sockets of an electric vehicle, the method comprising the steps of:
capturing a first image of the two or more charging sockets of the electric vehicle by an imaging device mounted in a fixed relationship to an end effector of a robotic arm, the first image being indicative of a pose of the array of the two or more charging sockets;
using the pose of said array of the charging sockets to determine a spatial relationship between said array of charging sockets and two or more charging plugs maintained in a complementary rigid array for mating with said charging sockets by a housing associated with the end effector; and
deploying the robotic arm to align the housing to facilitate engagement of said rigid array of charging plugs with the charging sockets.

In one embodiment, deploying the robotic arm comprises:
capturing a plurality of successive second images of the two or more charging sockets of the electric vehicle by the imaging device, and
aligning the housing by using the plurality of successive second images to determine the successive spatial relationships between said array of charging sockets and the housing as the robotic arm approaches the electric vehicle.

In one embodiment, the method further comprises confirming that the array of charging plugs is engaged with the complementary array of said charging sockets by means of an engagement signal derived from a load sensor interposed between the housing and a terminal end of the robotic arm.

In one embodiment, the method further comprises controlling the robotic arm to re-orient the end effector in response to the engagement signal from the load sensor when the engagement signal is indicative of strain above a predetermined threshold.

In one embodiment, the method further comprises directing a stream of compressed air towards said charging sockets to remove particulates therefrom prior to engaging said array of charging plugs with the complementary array of said charging sockets.

In another aspect of the disclosure there is provided a computer program product with a program code, which is stored on a medium readable by a computer, for carrying out a method of simultaneously engaging two or more charging plugs with two or more charging sockets of an electric vehicle as defined above.

In another aspect of the disclosure there is provided an electric vehicle charging system comprising:
a charging unit for providing electrical power to a battery of an electric vehicle, the charging unit having two or more charging plugs to supply electrical power to the battery of the electric vehicle when engaged with two or more charging sockets disposed in the electric vehicle; and
a robotic arm, the robotic arm having an end effector as defined above to facilitate simultaneous engagement of the two or more charging plugs with the two or more charging sockets of the electric vehicle.

In another aspect of the disclosure there is provided an electric vehicle charging station comprising:
a charging unit for providing electrical power to a battery of an electric vehicle, the charging unit having two or more charging plugs to supply electrical power to the battery of the electric vehicle when engaged with two or more charging sockets disposed in the electric vehicle;
a robotic arm, the robotic arm having an end effector as defined above to facilitate simultaneous engagement of the two or more charging plugs with the two or more charging sockets of the electric vehicle; and
a further housing for the charging unit and the robotic arm.

In one embodiment the robotic arm is moveable between a stowed configuration whereby the end effector and the robotic arm are disposed within the further housing, and a deployed configuration whereby the end effector and at least a portion of the robotic arm are disposed outside the further housing.

In one embodiment the electric vehicle charging station is located adjacent to a charging lane arranged to direct the electric vehicle in a manner whereby the two or more charging sockets disposed in the electric vehicle are within reach of the end effector of the robotic arm when the robotic arm is in the deployed configuration.

In one embodiment, the charging lane may be provided with markings, barriers or other guide means to guide the electric vehicle to come to a halt at a location proximal to the further housing.

In an alternative aspect of the disclosure there is provided a manually operated device to facilitate simultaneous engagement of two or more charging plugs with two or more complementary charging sockets of the electric vehicle, said device comprising a housing configured to maintain two or more charging plugs in a rigid array for mating with a complementary array of two or more charging sockets of an electric vehicle, and a handle associated with the housing to allow the manual operator to grasp and manipulate said device.

In another aspect of the disclosure there is provided a manually operated electric vehicle charging system comprising:
a charging unit for providing electrical power to a battery of an electric vehicle, the charging unit having two or more charging plugs to supply electrical power to the battery of the electric vehicle when engaged with two or more charging sockets disposed in the electric vehicle; and
a manually operated device to facilitate simultaneous engagement of the two or more charging plugs with the two or more charging sockets of the electric vehicle as defined above.

### Brief Description of Drawings

Notwithstanding any other forms which may fall within the scope of the disclosure as set forth in the Summary, specific embodiments will now be described with reference to the accompanying figures below:
Figure 1 is a perspective view of one embodiment of a robotic arm having six degrees of motion;

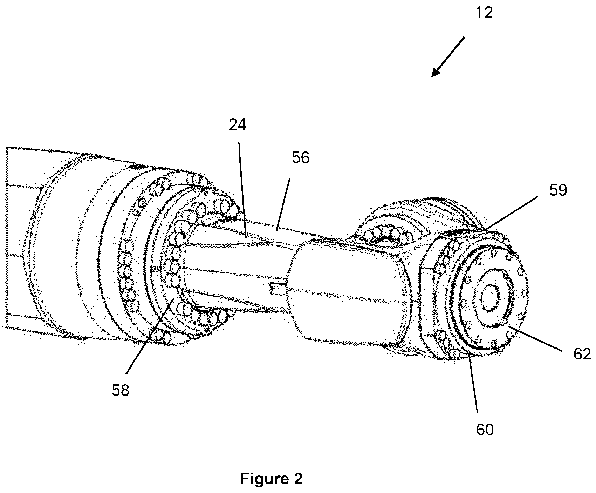

Figure 2 is a perspective view of a terminal end of the robotic arm, in particular showing a mounting flange in the absence of an end effector mounted thereon;

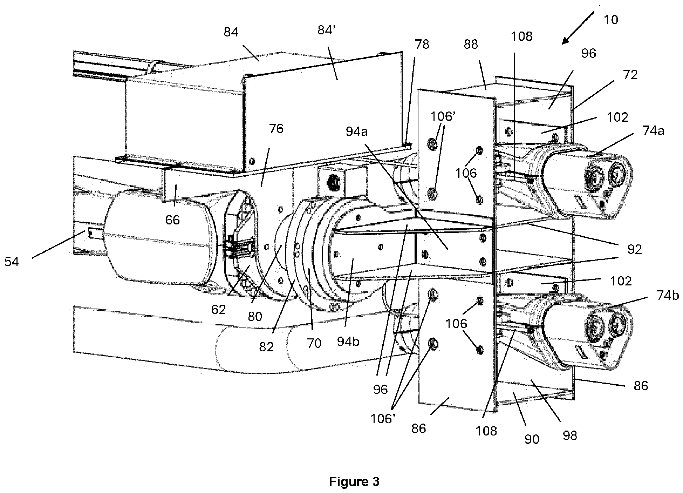

Figure 3 is a perspective view of the end effector as described herein mounted on the mounting flange on the terminal end the robotic arm shown in Figure 2;

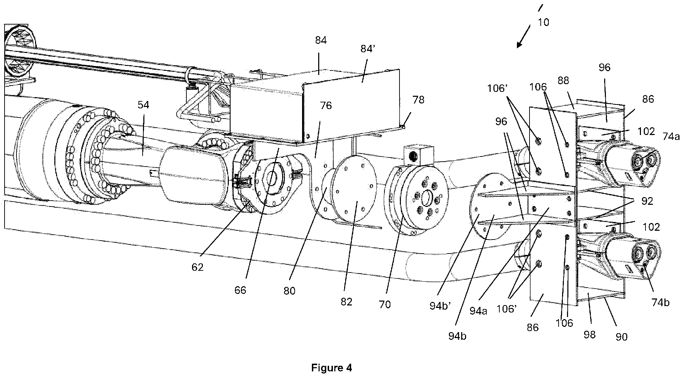

Figure 4 is an exploded view of the end effector as shown in Figure 2;

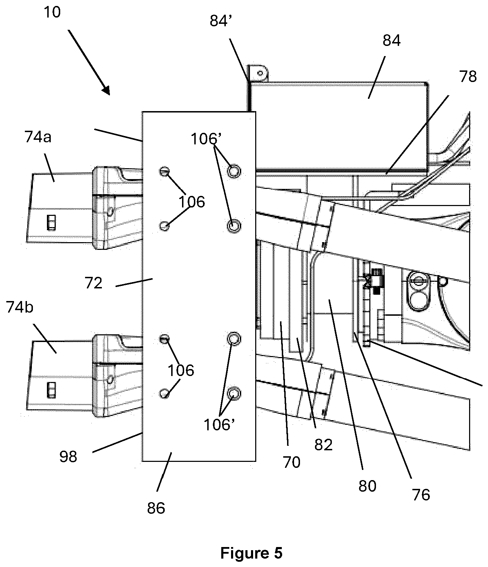

Figure 5 is a side view of the end effector as shown in Figures 3 and 4;
Figure 6 is a front view of the end effector as shown in Figures 3, 4 and 5; and

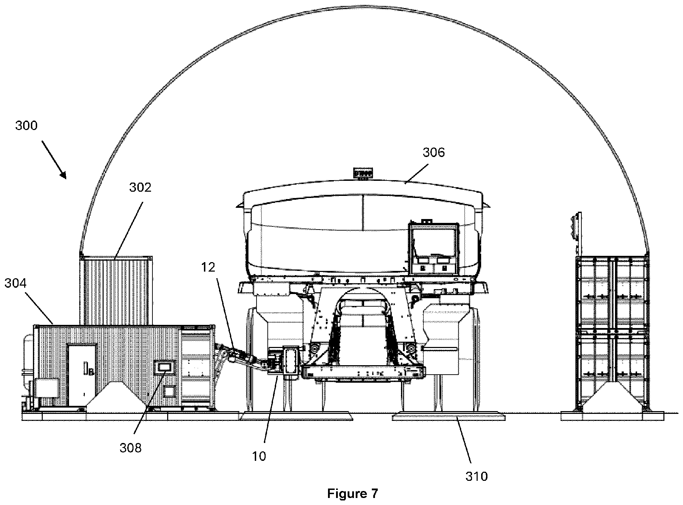

Figure 7 is a schematic view of one embodiment of an electric vehicle charging system as described herein.

### Description of Embodiments

The disclosure relates to an end effector to facilitate simultaneous engagement of two or more charging plugs with two of more charging sockets of an electric vehicle, an electric vehicle charging system and a method of charging an electric vehicle.

### GENERAL TERMS

Throughout this specification, unless specifically stated otherwise or the context requires otherwise, reference to a single step, composition of matter, group of steps or group of compositions of matter shall be taken to encompass one and a plurality (i.e. one or more) of those steps, compositions of matter, groups of steps or groups of compositions of matter. Thus, as used herein, the singular forms "a", "an" and "the" include plural aspects unless the context clearly dictates otherwise. For example, reference to "a" includes a single as well as two or more; reference to "an" includes a single as well as two or more; reference to "the" includes a single as well as two or more and so forth.

Each example of the present disclosure described herein is to be applied *mutatis mutandis* to each and every other example unless specifically stated otherwise. The present disclosure is not to be limited in scope by the specific examples described herein, which are intended for the purpose of exemplification only. Functionally-equivalent products, compositions and methods are clearly within the scope of the disclosure as described herein.

The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.).

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Reference to positional descriptions, such as lower and upper, are to be taken in context of the embodiments depicted in the figures, and are not to be taken as limiting the invention to the literal interpretation of the term but rather as would be understood by the skilled addressee.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The term "and/or", e.g., "X and/or Y" shall be understood to mean either "X and Y" or "X or Y" and shall be taken to provide explicit support for both meanings or for either meaning.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

Unless otherwise defined, all technical and scientific terms used herein have the same meaning as commonly understood by one of ordinary skill in the art to which this invention belongs. Although methods and materials similar or equivalent to those described herein can be used in the practice or testing of the present invention, suitable methods and materials are described below. In case of conflict, the present specification, including definitions, will control. In addition, the materials, methods, and examples are illustrative only and not intended to be limiting.

The term "about" as used herein means within 5%, and more preferably within 1%, of a given value or range. For example, "about 3.7%" means from 3.5 to 3.9%, preferably from 3.66 to 3.74%. When the term "about" is associated with a range of values, e.g., "about X% to Y%", the term "about" is intended to modify both the lower (X) and upper (Y) values of the recited range. For example, "about 20% to 40%" is equivalent to "about 20% to about 40%".

### SPECIFIC TERMS

The term 'position' as used herein refers to a location within a Cartesian coordinate system at which an object is located in a geometric space. A change in position ('positioning') is understood to mean a translation from a first specific location within the Cartesian coordinate system to a second specific location within the Cartesian coordinate system. The term 'orientation' as used herein refers to an alignment of an object with respect to the axes of the Cartesian coordinate system. A change in orientation ('orienting') is understood to mean a rotation around the corresponding axes of the Cartesian coordinate system from a first specific orientation to a second specific orientation. Position and orientation may collectively be referred to as a pose.

The term 'align' as used herein refers to orienting a first object along a joining or connecting axis opposite a second object in such a way that the first and second objects may be merged or connected by performing a movement of the first object relative to the second object along the joining or connecting axis.

The term 'simultaneous' or 'simultaneously' as used herein refers to an occurrence or an action being taken at the same time. With reference to engagement of two or more charging plugs with two or more charging sockets, simultaneous engagement refers to engagement of the two or more charging plugs with the two or more charging sockets at the same time, not successively.

### END EFFECTOR FOR AUTONOMOUS CHARGING OF ELECTRIC VEHICLE

Referring to the Figures, wherein like numerals refer to like features throughout, there is shown one embodiment of an end effector 10 supported by a robotic arm 12. The robotic arm 12 is configured to move the end effector 10 to facilitate simultaneous engagement of two charging plugs with two complementary charging sockets of an electric vehicle.

The electric vehicle may be any type of vehicle In particular, the electric vehicle may be a heavy land vehicle such as a truck, a bus, or a heavy mining vehicle such as a dump truck, loading machine, excavator, bogger and so forth. The electric vehicle may include manned vehicles, semi-autonomous vehicles, and fully autonomous vehicles.

A propulsion system of the electric vehicle may be powered by electrical energy from an onboard energy storage device, such as a vehicle battery. After a prolonged period of operation, the onboard energy storage device becomes depleted and requires re-charging. Such re-charging may occur by coupling the onboard energy storage device to a source of electrical power.

In the embodiments described herein, the electric vehicle may be provided with two charging sockets disposed in vertical alignment with one another on a side of the electric vehicle. The two charging sockets are arranged in electrical communication with the onboard energy storage device to facilitate supply of electrical power thereto when two charging plugs are engaged with the charging sockets of the electric vehicle.

It will be appreciated that in alternative embodiments, the electric vehicle may be provided with two or three charging sockets in vertical alignment with one another or two or three charging sockets in horizontal alignment with one another. In other embodiments, the electric vehicle may be provided with an array of charging sockets, for example 2 x 2, 2 x 3, 3 x 3 and so forth or an array where a horizontal alignment of an even number of charging sockets is alternated with a horizontal alignment of an odd number of charging sockets. Alternatively, the two or more charging sockets may be disposed in a circular array, a triangular array or a polygonal array (e.g. hexagonal array).

The charging plugs may be in electrical communication with a charging unit by means of a respective cable for providing electrical power to the battery of the electric vehicle when the two or more charging plugs are engaged with complementary two or more charging sockets disposed in the electric vehicle. The charging unit supplies a fixed limit of power through each charging plug, for example 3MWh. Accordingly, double the power may be supplied to the battery of the electric vehicle when two charging plugs are engaged in the charging sockets, up to triple the power may be supplied to the battery of the electric vehicle when three charging plugs are engaged in the charging sockets, and so forth.

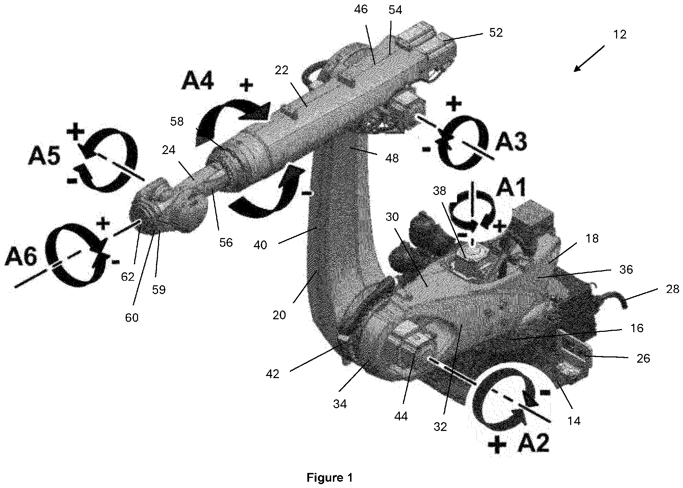

The robotic arm 12 as shown in Figure 1 includes a fixed base plate 14, a turntable 16, a first linkage arm assembly 18, a second linkage arm assembly 20, a third linkage arm assembly 22, and a wrist assembly 24.

The fixed base plate 14 may be mounted on a concrete slab of an electric vehicle charging station 200 for housing an electric vehicle charging unit 202. The fixed base plate 14 is provided with lifting brackets 26 for positioning the robotic arm 12 in the electric vehicle charging station 200 and a plurality of conduits 28 to supply electrical power and communications to the robotic arm 12.

The turntable 16 is mounted on the fixed base plate 14 and arranged for rotational movement in a clockwise and an anti-clockwise direction of up to ± 185º about a base axis A1. Base axis A1 is disposed coincident with a central longitudinal axis of the turntable 16. The first linkage arm assembly 18 is mounted on the turntable 16. The first linkage arm assembly 18 includes a first linkage arm 30 having a fixed end 32 mounted to the turntable 16 and a free end 34 extending generally laterally from the turntable 16. A body 36 depends from the fixed end 32 of the first linkage arm 30 in a generally opposing direction from the first linkage arm 30 to counter balance the weight of the first linkage arm 30. The first arm assembly 18 also includes a motor 38 to rotate the turntable 16 and the first linkage arm assembly 18 about base axis A1 at a rotational speed (with rated payload) of up to 105 º /s.

The second linkage arm assembly 20 includes a second linkage arm 40 having one end 42 pivotably attached to the free end 34 of the first linkage arm 30 for pivotal movement about a first arm axis A2, and a motor 44 to drive pivotal motion of the second linkage arm 40 in a clockwise and an anti-clockwise direction with an angular range of -120º - 70 º about the first arm axis A2 at a rotational speed (with rated payload) of up to 101 º /s. First arm axis A2 is disposed in perpendicular alignment with the free end 34 of the first linkage arm 30.

The third linkage arm assembly 22 includes a third linkage arm 46 pivotably attached to an opposing end 48 of the second linkage arm 40 for pivotal movement about a second arm axis A3, and a motor (not shown) to drive pivotal motion of the third linkage arm 46 in a clockwise and an anti-clockwise direction with an angular range of -120º - 168 º about second arm axis A3 at a rotational speed (with rated payload) of up to 110 º /s.

The third linkage arm assembly 22 also includes a further motor 52 disposed at free end 54 of the third linkage arm 46 to drive rotational motion of the third linkage arm 46 about a third arm axis A4 disposed in central longitudinal alignment therewith. Motor 52 drives rotational motion of the third linkage arm 46 in a clockwise and an anti-clockwise direction with an angular range of up to ± 350º about third arm axis A4 at a rotational speed (with rated payload) of up to 150 º /s.

The wrist assembly 24 includes a wrist portion 56 on an opposing end 58 of the third linkage arm 46. The wrist portion 56 is pivotable about a wrist axis A5 disposed in perpendicular horizontal alignment with the third linkage arm 46 in an angular range of ± 125º. Pivotal motion of the wrist portion 56 is driven by a motor housed internally proximal the opposing end 58 of the third linkage arm 46. The wrist portion 56 is also rotatable about a central longitudinal axis A6 of the wrist portion in a clockwise and anti-clockwise direction with an angular range of up to ± 350º about axis A6 at a rotational speed (with rated payload) of up to 260 º /s by means of motor 59. A terminal end 60 of the wrist portion 56 is provided with a mounting flange 62 arranged, in use, to support the end effector 10 as described herein.

As described above, the robotic arm 12 is configured to have six degrees of motion about axes A1-A6. Movement of the robotic arm 12 is controlled by a programmable controller that controls respective electric motors 38, 44, 52, 59 to pivot or rotate the turntable 30, the first linkage arm assembly 18, the second linkage arm assembly 20, the third linkage arm assembly 22 and the wrist assembly 24, respectively, as described above. Pivotal and/or rotational movement about all six axes A1-A6 is coordinated by the programmable controller to move the end effector 10 from a first pose to a second pose along the shortest path in one smooth coordinated movement.

The controller may be an electronic controller that operates in a logical fashion to perform operations, execute control algorithms, store and retrieve data and other desired operations. The controller may include or access memory, secondary storage devices, processors, and any other components for running an application. The memory and secondary storage devices may be in the form of read-only memory (ROM) or random access memory (RAM) or integrated circuitry that is accessible by the controller. The controller may be a single controller or may include more than one controller disposed to control various functions and/or features of the robotic arm 12. The term "controller" as used herein is to be construed in its broadest sense to include one or more controllers and/or microprocessors that may be associated with the robotic arm 12 and that may cooperate in controlling various functions and operations of the robotic arm 12 and the end effector 10. The functionality of the controller may be implemented in hardware and/or software without regard to the functionality.

The end effector 10 includes a mounting bracket 66 for coupling the end effector 10 to the robotic arm 12, an imaging device 68 for perceiving the array of charging sockets of the electric vehicle when the electric vehicle is in line of sight of the imaging device, a load sensor 70, and a housing 72 configured to maintain two or more charging plugs 74 in a rigid array for mating with the complementary array of two of more charging sockets of the electric vehicle.

The mounting bracket 66 includes a face plate 76 configured to be mounted on the mounting flange 62 in a facing arrangement by means of a plurality of fasteners, an upper plate 78 disposed in perpendicular alignment with the face plate 76, and a cylindrical member 80 projecting forwardly of the face plate 76 in longitudinal alignment with the wrist portion 54 of the robotic arm 12, the cylindrical member 80 having a flange 82 at a terminal end thereof.

The upper plate 78 supports the imaging device 68 and a housing 84 for the imaging device 68. The imaging device 68 shown in the Figures is a camera. The imaging device 68 may include any other type of imaging device generally known in the art that is capable, in use, of perceiving the array of charging sockets of the electric vehicle when the electric vehicle is in line of sight of said device 68 and generating an image or other signal that is indicative of a pose of the charging sockets of the electric vehicle. It should be noted that the present disclosure is not limited by a type of imaging device 68. In other embodiments, the imaging device 68 may include a camcorder, a closed-circuit television (CCTV), depth cameras, laser scanners, a LiDAR sensor, a RADAR sensor, and the like. It should also be noted that the present disclosure is not limited to a single imaging device 68 and it is within the scope of the disclosure that the imaging device 68 may include one or more imaging devices of the same or different type to generate one or more images that in combination are indicative of the pose of the charging sockets of the electric vehicle.

The imaging device housing 84 may be a box to protect the imaging device 68 from dust when the imaging device 68 is not in use. Said housing 84 may be provided with a front door 84' which can be opened, for example by a pneumatic actuator, to allow the imaging device 68 an unobscured view or line of sight when in use.

The load sensor 70 may be any suitable sensor capable of providing a signal confirming that the array of charging plugs 74 is engaged with the complementary array of charging sockets. In particular, the load sensor 70 may be a strain gauge or a force torque sensor. The load sensor 70 may be mounted on the flange 82 of the cylindrical member 80 of the mounting bracket 66.

While the array of charging plugs 74 is engaged with the complementary array of charging sockets, the electric vehicle may be subject to dynamic forces due to wind loading or load movement even though the electric vehicle remains stationary. Consequently, the body of the electric vehicle and the array of charging sockets may be subject to movement during a charging operation, thereby placing a load strain on the robotic arm 12 and the end effector 10.

Advantageously, the load sensor 70 may generate an engagement signal indicative of strain associated with engagement of said charging plugs 74 with said charging sockets, whereby the controller associated with the robotic arm 12 is arranged to control the robotic arm 12 to re-align the end effector 10 in response to the engagement signal when the engagement signal is indicative of strain above a predetermined threshold.

In embodiment shown in the Figures, the housing 72 is configured to maintain two charging plugs 74a, 74b in vertical alignment with one another. It will be appreciated that in other embodiments, the housing 72 may be configured to house two charging plugs 74a, 74b in horizontal alignment with one another or more than two charging plugs in either vertical or horizontal alignment with one another or arranged in an alternative array to complement the array of charging sockets on the electric vehicle as described earlier.

The housing 72 includes a pair of opposing side plates 86 interconnected by an upper plate 88, a lower plate 90 and a plurality of intermediate plates 92 to provide structural rigidity to the housing 72 and define an upper portion 96 of the housing 72 and a lower portion 98 of the housing 72.

The housing 72 is provided with an L-shaped bracket 94 extending laterally from one of the side plates 86. A first member 94a of the L-shaped bracket 94 is mounted to a mid-portion of the side plate 86 and a second member 94b of the L-shaped bracket 94 is configured with a flange portion 94b' for mounting to the load sensor 70 thereby rigidly fixing the housing 72 to the mounting bracket 66 with the load sensor 70 interposed therebetween. The first and second members 94a, 94b of the L-shaped bracket 94 may be provided with web members 96 extending therebetween to improve rigidity of the L-shaped bracket 94.

The length of second member 94b has the effect of offsetting the housing 72 with respect to the terminal end of the robotic arm 12 so that the housing 72 does not obscure the line of sight of the imaging device 68.

The L-shaped bracket 94 may be mounted to the mid-portion of the side plate 86 of the housing 72 in a manner whereby the upper plate 88 and the lower plate 90 of the housing 72 are spaced equidistantly from the load sensor 70. In this way, the load sensor 70 is conveniently arranged to detect an imbalance in strain between the upper portion 96 of the housing 72 and the lower portion 98 of the housing 72, in particular when the charging plugs 74 are rigidly held in the housing 72 and engaged with the charging sockets of the electric vehicle as will be described in more detail below.

The housing 72 is arranged to rigidly hold a first of the two charging plugs 74a in an upper portion 96 of the housing 72 and a second of the two charging plugs 74b in a lower portion 98 of the housing 72 in vertical alignment with charging plug 74a. Each charging plug 74a, 74b is provided with a lug 100 on opposing sides thereof. The lugs 100 are arranged in use to be interposed and fastened between corresponding pairs of L-shaped brackets 102 mounted to each facing surface 104 of the opposing side plates 86 in the upper and lower portions 96, 98 of the housing 72.

The L-shaped brackets 102 are mounted to the facing surfaces 104 of the opposing side plates 86 by means of fasteners protruding through apertures 106, 106' in the opposing side plates 86. Rearwardly disposed apertures 106' may have a larger diameter (i.e. tolerance) than forwardly disposed apertures 106 to allow for a tilt adjustment of the brackets 102.

Minor vertical adjustment of the lugs 100 with respect to the brackets 102 may also be achieved by means of one or more washers or spacers used with threaded fasteners and nuts to fasten the lugs 100 between the brackets 102.

In some embodiments, the end effector 10 also includes a nozzle 108 in fluid communication with a source of compressed air. The nozzle 108 may be fixed alongside the charging plugs 74a, 74b between the L-shaped brackets 102. In use, the controller associated with the robotic arm 12 is arranged to actuate the nozzle 108 to direct a stream of compressed air towards said charging sockets to remove particulates therefrom prior to engaging the charging plugs 74a, 74b with the complementary array of said charging sockets on the electric vehicle.

### ELECTRIC VEHICLE CHARGING STATION

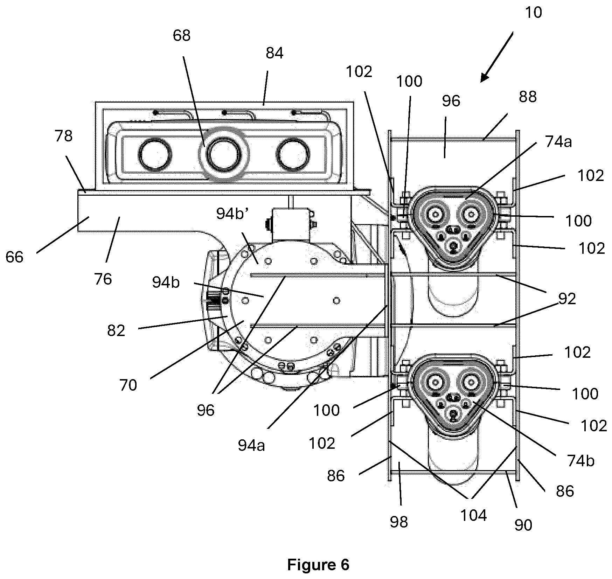

Referring to Figure 6, there is shown an electric vehicle charging station 300 including a charging unit 302 for supplying electrical power, a robotic arm 12 and an end effector 10 as described previously, and a housing 304 therefor. The robotic arm 12 is conveniently located adjacent to the charger unit 302. Charging cables 306 supply electrical power of up to 3 MWh each from the charging unit 302 to the charging plugs 74a, 74b of an electric vehicle 306 as described previously.

The housing 304 may be a free-standing shelter such as a shed or a shipping container provided with an access door, such as a roller door. It will be appreciated that the shape and size of the housing 304 is arranged so that the robotic arm 12 may be moveable between a stowed configuration whereby the end effector 10 and the robotic arm are disposed within the housing 304, and a deployed configuration whereby the end effector 10 and at least a portion of the robotic arm 12 are disposed outside the housing 304. The weight of the charging cables may be supported by spring balanced supports depending from a ceiling of the housing 304.

The electric vehicle charging station 300 is located adjacent to a charging lane 310 arranged to direct the electric vehicle 306 in a manner whereby the two or more charging sockets disposed in the electric vehicle 306 are within reach of the end effector 10 of the robotic arm 12 when the robotic arm 12 is in the deployed configuration (i.e. "in proximity to the electric vehicle charging station"). The charging lane 310 may be provided with markings, barriers or other guide means which are used to guide the electric vehicle to come to a halt at a location proximal to the housing 304. For example, the charging lane 310 may be provided with a camera, such as a CCTV, disposed externally to the housing 304 to detect a distance of the electric vehicle from the electric vehicle charging station 300. Traffic lights may also be used to signal fine adjustment of the electric vehicle with respect to the electric vehicle charging station 300. Alternatively, or additionally, the charging lane 310 may be provided with load sensors to detect the presence of the electric vehicle in proximity to the electric vehicle charging station 300.

When the electric vehicle 306 is in proximity to the electric vehicle charging station 300, a signal may be received by the controller to open or raise the access door of the housing 304 and to deploy the robotic arm 12 to move the robotic arm 12 from the stowed configuration to a partially deployed configuration. The term "partially deployed configuration" as used herein refers to a configuration of the robotic arm whereby the end effector 10 and at least a portion of the robotic arm 12 may be outside the housing 304 but where the end effector 10 has not yet engaged the rigid array of charging plugs 74a, 74b with the charging sockets on the electric vehicle.

The imaging device 68 may then capture a first image of the array of charging sockets of the electric vehicle 306, the first image being indicative of a pose of the array of the charging sockets. The controller uses the first image to determine a spatial relationship between the array of charging sockets and the charging plugs 74a, 74b and subsequently actuates the robotic arm 12 to move the end effector 10 closer to the array of charging sockets on the electric vehicle 306, optionally in a manner to align the housing of the end effector.

The imaging device 68 may then capture a plurality of second images of the array of charging sockets of the electric vehicle in succession. In response to receiving each of the plurality of said second images, the controller determines the spatial relationship between the end effector 10 and the array of charging sockets on the electric vehicle 306 as the robotic arm 12 successively approaches the electric vehicle and deploys the robotic arm 12 to align the housing to facilitate engagement of the rigid array of charging plugs 74a, 74b with the charging sockets of the electric vehicle.

The load sensor 70 sends an engagement signal to the controller to confirm that the array of charging plugs 74 is engaged with the complementary array of charging sockets of the electric vehicle 306. The controller may then communicate with the onboard communications of the electric vehicle 306 and the charging unit 302 to commence charging. Optionally, prior to commencing charging, the controller may confirm that there is electrical contact between respective pins in the charging sockets and the charging plugs.

Once communication is established, the electric vehicle 306 has an option to lock the charging plugs 74a, 74b into the sockets by means of an electric actuator.

In embodiments where the electric vehicle 306 is a manually operated electric vehicle, the electric vehicle charging station 300 may be optionally provided with a human user interface 308 associated with the housing 304 and in communication with the controller. The operator of the electric vehicle 306 may depart the electric vehicle 306 when it comes to a halt at the electric vehicle charging station 300 and the operator may subsequently interact with the human user interface 308 to provide various commands to the controller concerning deployment of the robotic arm 12 and the end effector 10 with respect to charging the electric vehicle 306.

During a charging operation, the load sensor 70 continues to monitor load strain on the robotic arm 12 and the end effector 10 while the charging plugs 74a, 74b are engaged with the array of charging sockets. If the electric vehicle 306 is subject to dynamic forces due to wind loading or load movement, the load sensor 70 may generate an engagement signal indicative of strain above a predetermined threshold. In response to the engagement signal indicative of strain above a predetermined threshold, the controller associated with the robotic arm 12 is arranged to control the robotic arm 12 to re-align the end effector 10 to reduce the load strain to below the predetermined threshold.

After charging is completed or the battery of the electric vehicle 306 has reached a desired percentage charge, the controller may then communicate with the onboard communications of the electric vehicle and the charging unit 302 to cease charging. The controller may subsequently unlock the charging plugs 74a, 74b and actuate the robotic arm 12 to withdraw the end effector 10 to disengage the rigid array of charging plugs 74a, 74b from the charging sockets of the electric vehicle 306 and to subsequently actuate the robotic arm 12 to adopt the stowed configuration within the housing 304. The electric vehicle 306 may then depart the charging lane 310.

The present disclosure may also relate to a computer program product with a program code, which may be stored and read by a computer, for instructing the controller and carrying out a method of simultaneously engaging two or more charging plugs 74a, 74b, with two or more charging sockets of an electric vehicle as described above.

The computer program product may be stored in a virtual storage facility (e.g. 'the cloud') or on a computer-readable medium. The computer-readable medium may be internal memory of a computer as well as removable memory such as a floppy disk, a CD, a DVD, a USB stick, a memory card and the like. In this way, the method according to the disclosure may be made available to a computer, which may be the controller of the robotic arm 12 and the end effector 10.

It will be appreciated by persons skilled in the art that numerous variations and/or modifications may be made to the above-described embodiments, without departing from the broad general scope of the present disclosure. The present embodiments are, therefore, to be considered in all respects as illustrative and not restrictive.

It is also within the scope of the present disclosure to provide a manually operated device to facilitate simultaneous engagement of two or more charging plugs with two or more complementary charging sockets of the electric vehicle. The device may comprise a housing as described previously, wherein the housing is configured to maintain two or more charging plugs in a rigid array for mating with a complementary array of two or more charging sockets of an electric vehicle. The device may also include a handle associated with the housing to allow the manual operator to grasp and manipulate said device. In this particular embodiment, the manual operator manipulates the device to simultaneously engage two or more charging plugs with two or more complementary charging sockets of the electric vehicle rather than engaging two or more charging plugs with two or more complementary charging sockets in succession (e.g. one at a time)

In this alternative embodiment, a manually operated electric vehicle charging system may include a charging unit for providing electrical power to a battery of an electric vehicle, as described above and the aforementioned manually operated device to facilitate simultaneous engagement of the two or more charging plugs with the two or more charging sockets of the electric vehicle.

In the claims which follow and in the preceding description except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. An end effector supported by a robotic arm, the robotic arm being configured to move the end effector to facilitate simultaneous engagement of two or more charging plugs with two or more charging sockets of an electric vehicle, said end effector comprising:
a mounting bracket for coupling the end effector to the robotic arm;
a housing associated with the mounting bracket, the housing configured to maintain two or more charging plugs in a rigid array for mating with a complementary array of two or more charging sockets of an electric vehicle; and,
an imaging device mounted on the mounting bracket, the imaging device configured to generate a pose signal indicative of a pose of the complementary array of said charging sockets of the electric vehicle, whereby a controller associated with the robotic arm is arranged to receive the pose signal and determine a spatial relationship between said array of charging plugs and the complementary array of charging sockets and to control the robotic arm using the determined spatial relationship to align the housing of the end effector to facilitate engagement of said array of charging plugs with the complementary array of said charging sockets.

2. The end effector according to claim 1, wherein the end effector further comprises a load sensor associated with the mounting bracket, the load sensor configured to generate an engagement signal indicative of strain associated with engagement of said charging plugs with said charging sockets, whereby the controller associated with the robotic arm is arranged to control the robotic arm to re-orient the end effector in response to the engagement signal when the engagement signal is indicative of strain above a predetermined threshold.

3. The end effector according to claim 2, wherein the load sensor is configured to provide a signal confirming that the array of charging plugs is engaged with the complementary array of said charging sockets.

4. The end effector according to claim 3, wherein the load sensor comprises a force torque sensor.

5. **The end** effector according to any one of the preceding claims, wherein the robotic arm is configured to move the end effector in three degrees of motion, four degrees of motion, or six degrees of motion.

6. The end effector according to any one of claims 1 to 5, wherein:
a) the two or more charging plugs are disposed in vertical alignment with one another;
b) the two or more charging plugs are disposed in horizontal alignment with one another;
c) four or more charging plugs are disposed in an array of x x y, where x ≥ 2 and y ≥ 2; or
d) the two or more charging sockets are disposed in a circular array, a triangular array or a polygonal array (e.g. hexagonal array).

7. The end effector according to any one of the preceding claims, wherein the housing is laterally offset from a terminal end of the robotic arm so as not to obscure a view or line of sight of the imaging device.

8. The end effector according to any one of claims 2 to 10, wherein an upper edge and a lower edge of the housing are spaced equidistantly from the load sensor.

9. The end effector according to any one of the preceding claims, wherein the end effector further comprises a nozzle in fluid communication with a source of compressed air, wherein the controller associated with the robotic arm is arranged to actuate the nozzle to direct a stream of compressed air towards said charging sockets to remove particulates therefrom prior to engaging said array of charging plugs with the complementary array of said charging sockets.

10. A method of simultaneously engaging two or more charging plugs with two or more charging sockets of an electric vehicle, the method comprising the steps of:
capturing a first image of the two or more charging sockets of the electric vehicle by an imaging device mounted in a fixed relationship to an end effector of a robotic arm, the first image being indicative of a pose of the array of the two or more charging sockets;
using the pose of said array of the charging sockets to determine a spatial relationship between said array of charging sockets and two or more charging plugs maintained in a complementary rigid array for mating with said charging sockets by a housing associated with the end effector; and
deploying the robotic arm to align the housing to facilitate engagement of said rigid array of charging plugs with the charging sockets.

11. The method according to claim 10, wherein deploying the robotic arm comprises:
capturing a plurality of successive second images of the two or more charging sockets of the electric vehicle by the imaging device, and
aligning the housing by using the plurality of successive second images to determine the successive spatial relationships between said array of charging sockets and the housing as the robotic arm approaches the electric vehicle.

12. The method according to claim 10 or claim 11, wherein the method further comprises confirming that the array of charging plugs is engaged with the complementary array of said charging sockets by means of an engagement signal derived from a load sensor interposed between the housing and a terminal end of the robotic arm.

13. The method according to claim 12, wherein the method further comprises controlling the robotic arm to re-orient the end effector in response to the engagement signal from the load sensor when the engagement signal is indicative of strain above a predetermined threshold.

14. The method according to any one of the preceding claims, wherein the method further comprises directing a stream of compressed air towards said charging sockets to remove particulates therefrom prior to engaging said array of charging plugs with the complementary array of said charging sockets.

15. A computer program product with a program code, which is stored on a medium readable by a computer, for carrying out a method of simultaneously engaging two or more charging plugs with two or more charging sockets of an electric vehicle as defined in any one of claims 10 to 14.

16. An electric vehicle charging system comprising:
a charging unit for providing electrical power to a battery of an electric vehicle, the charging unit having two or more charging plugs to supply electrical power to the battery of the electric vehicle when engaged with two or more charging sockets disposed in the electric vehicle; and
a robotic arm, the robotic arm having an end effector as defined in any one of claims 1 to 9 to facilitate simultaneous engagement of the two or more charging plugs with the two or more charging sockets of the electric vehicle.

17. An electric vehicle charging station comprising:
a charging unit for providing electrical power to a battery of an electric vehicle, the charging unit having two or more charging plugs to supply electrical power to the battery of the electric vehicle when engaged with two or more charging sockets disposed in the electric vehicle;
a robotic arm, the robotic arm having an end effector as defined in any one of claims 1 to 9 to facilitate simultaneous engagement of the two or more charging plugs with the two or more charging sockets of the electric vehicle; and
a further housing for the charging unit and the robotic arm.

18. The electric vehicle charging station according to claim 17, wherein the robotic arm is moveable between a stowed configuration whereby the end effector and the robotic arm are disposed within the further housing, and a deployed configuration whereby the end effector and at least a portion of the robotic arm are disposed outside the further housing.

19. The electric vehicle charging station according to claim 18, wherein the electric vehicle charging station is located adjacent to a charging lane arranged to direct the electric vehicle in a manner whereby the two or more charging sockets disposed in the electric vehicle are within reach of the end effector of the robotic arm when the robotic arm is in the deployed configuration.

20. A manually operated device to facilitate simultaneous engagement of two or more charging plugs with two or more complementary charging sockets of the electric vehicle, said device comprising a housing configured to maintain two or more charging plugs in a rigid array for mating with a complementary array of two or more charging sockets of an electric vehicle, and a handle associated with the housing to allow the manual operator to grasp and manipulate said device.

21. A manually operated electric vehicle charging system comprising:
a charging unit for providing electrical power to a battery of an electric vehicle, the charging unit having two or more charging plugs to supply electrical power to the battery of the electric vehicle when engaged with two or more charging sockets disposed in the electric vehicle; and
a manually operated device to facilitate simultaneous engagement of the two or more charging plugs with the two or more charging sockets of the electric vehicle as defined in claim 20.
